# EUROPEAN PATENT SPECIFICATION

(11) **EP 3 678 898 B1**
(45) Date of publication and mention of the grant of the patent: **14.02.2024**
(21) Application number: 18766023.8
(22) Date of filing: 31.08.2018
(51) Int. Cl.: B60P 3/12

(54) **A VEHICLE LIFT DEVICE**
WAGENHEBEVORRICHTUNG
DISPOSITIF DE LEVAGE DE VEHICULE

(30) Priority: 07.09.2017 GB 201714434
(43) Date of publication of application: 15.07.2020
(60) Divisional application: 22160842.5
(73) Proprietor: Supacat Limited, Honiton, Devon EX14 4LF (GB)
(72) Inventor: HAYWARD, Jim, Honiton Devon EX14 4LF (GB); FROST, Ian, Honiton Devon EX14 4LF (GB)
(74) Representative: Worthington, Richard Easton
(86) International application number: PCT/GB2018/052481
(87) International publication number: WO 2019/048836

(56) References cited:
- EP-A1- 2 508 390
- WO-A1-97/18104
- GB-A- 2 485 179
- US-A1- 2004 156 706
- US-A1- 2005 111 948
- US-A1- 2011 182 706

## Description

### FIELD OF THE INVENTION

The present invention relates to a vehicle lift device for a recovery vehicle. The present invention also relates to a vehicle, a control mechanism and method of operating a vehicle lift device for a recovery vehicle.

### BACKGROUND OF THE INVENTION

A recovery vehicle, also known as a tow truck, towing vehicle or breakdown vehicle, is a vehicle which is operable to recover or move another vehicle. Such a vehicle to be recovered or moved may be a disabled or otherwise indisposed vehicle.

Different types of recovery vehicles are known. One type of recovery vehicle involves using a winch to load a vehicle to be recovered onto the rear end of the vehicle. However, with such an arrangement it is necessary for the recovery vehicle to be suitably sized to counter the pivoting force resulting from the load of the recovered vehicle.

A different type of recovery vehicle uses a pivoting boom arrangement. In such an arrangement, a lift boom is mounted on the recovery vehicle about one end of the lift boom. The lift boom comprises a first arm portion pivoted about a first end on the vehicle chassis. The first arm portion protrudes from a side, typically a rear side, of the recovery vehicle. A second arm portion extends downwardly from a second end of the first arm portion. A support boom extends from a free end of the second arm. The support boom is arranged to mount to and support the vehicle to be recovered. Typically, the support boom mounts to and supports the front or rear wheels of the vehicle to be recovered. An actuator is provided to act on the lift boom to cause the lift boom to rotate and cause the lift boom and the support boom to move upwardly, and so lift an end of the vehicle to be recovered clear of the ground. As the support boom is moved upwardly the recovered vehicle pivots about the ground and the support boom.

In some arrangements, the support boom is manoeuvrable relative to the lift boom to aid positioning of the support boom relative to the vehicle to be recovered prior to supporting the vehicle. With such an arrangement, a pivot actuator is used to cause the support boom to pivot relative to the lift boom. Once in position, relative movement of the support boom and the lift boom is prevented upon lifting of the vehicle to be recovered.

A problem with this type of recovery vehicle is that the load of the vehicle that is able to be recovered is restricted as the pivot point between the recovery vehicle and the recovered vehicle is substantially spaced from the recovery vehicle. As such, the recovery vehicle is inclined to tip over.

A further type of recovery vehicle is disclosed in WO97/18104. This recovery vehicle includes a lift boom pivotably mounted on the chassis of the recovery vehicle and a support boom pivotably mounted to the lift boom. With this type of recovery vehicle the support boom is mounted to the vehicle to be recovered to form a continuous rigid assembly with the vehicle to be recovered. That is, the support boom is fixedly mounted to the vehicle to be recovered such that no relative movement is allowed between the support boom and the vehicle lift device.

A problem with the recovery vehicle in WO97/18104 is that it can be difficult to rigidly mount the vehicle to be recovered to the support boom. As such, complicated fixtures are required, and bespoke support booms or fixtures may be required for different vehicles. As such, use of this type of recovery vehicle would be time consuming and restrictive on the type of vehicle that may be recovered.

### SUMMARY OF THE INVENTION

According to an aspect of the invention, there is provided a vehicle lift device for a recovery vehicle comprising a lift boom configured to be pivotably connected to the recovery vehicle, a support boom on the lift boom configured to support a vehicle to be recovered, the vehicle lift device being operable in a first operating configuration and a second operating configuration, in which, in the first operating configuration, the support boom is restricted from rotating about the lift boom by a means for restricting rotation of the support boom about the lift boom, and the support boom is configured to pivotably couple with a chassis of the vehicle to be recovered about a coupled pivot axis, and in the second operating configuration, the support boom is freely pivotable about the lift boom and the support boom is configured to be restrictively coupled with the chassis of the vehicle to be recovered to restrict pivoting of the chassis about the coupled pivot axis in at least one direction by a means for causing restriction of the pivoting of the chassis about the coupled pivot axis in the at least one direction.

With the above arrangement, it is possible to use the same apparatus to selectively recover a vehicle using either a relatively straightforward coupling means, or change to an alternative configuration and increase the load of vehicle that the recovery vehicle is capable of recovering.

By changing the position of the pivot point between the lift boom and the chassis of the vehicle to be recovered it is possible to adjust the lift force available through the action of the lift boom, and to simultaneously adjust the lift force required to support the vehicle to be recovered in a lifted position.

The vehicle lift device may comprise a support boom pivot joint about which the support boom is configured to pivot relative to the lift boom.

The vehicle lift device may comprise a control mechanism configured to act in a first condition in which the support boom is restricted from rotating about the support boom pivot joint, and a second condition in which the support boom is free to rotate about the support boom pivot joint.

As such, it is possible to straightforwardly change the vehicle lift device between the different operating configurations.

The vehicle lift device may comprise an adjustment actuator extending from the lift boom and configured to act on the support boom to control movement of the support boom relative to the lift boom.

As such, it is possible to adjust the relative positions of the lift boom and the support boom in certain circumstances.

The adjustment actuator may be configured to act on the support boom about an adjustment pivot joint, wherein, in the first condition, the pivot axis of the adjustment pivot joint is spaced from the pivot axis of the support boom pivot joint, and, in the second condition, the pivot axis of the adjustment pivot joint is coaxial with the pivot axis of the support boom pivot joint.

With this arrangement, it is possible to easily provide a configuration in which the support boom is able to freely rotate with the lift boom. This also helps to remove any need to disconnect the adjustment actuator.

The vehicle lift device may comprise a control member on the support boom, in which the adjustment pivot joint is on the control member and the control member is movable to move the pivot axis of the adjustment pivot joint.

The control member may be pivotably mounted on the support boom.

As such the control member may be easily manipulated.

The control member may comprise an urging face which is locatable against a surface of the support boom to act on the support boom to restrict rotation of the support boom about the support boom pivot axis.

The vehicle lift device may comprise a control actuator configured to move the control member.

Therefore, it is possible for the control member to be moved without manual interaction.

The control actuator may extend between the support boom and the control member.

The vehicle lift device may comprise a coupler configured to couple the support boom to the chassis of the vehicle to be recovered.

In the first operating configuration, the coupler may be configured to be pivotably coupled with the chassis to allow pivoting of the chassis about the coupled pivot axis, and, in the second operating configuration, the coupler may be configured to restrictively couple with the chassis to restrict pivoting of the chassis about the pivot axis in the at least one direction.

As such, this arrangement helps to simplify the process of changing between different operating configurations.

The coupler may comprise a pivoting attachment configured to pivotably couple the support boom to the chassis of the vehicle to be recovered about the coupled pivot axis.

The pivoting attachment may comprise a coupling pin configured to couple to an attachment point on the chassis.

The pivoting attachment may be configured to support the wheel of the vehicle to be recovered, such that the support boom is pivotably coupled with the chassis of the vehicle to be recovered about an axle of the vehicle to be recovered acting as the coupled pivot axis.

The coupler may comprise a fixed attachment member configured to restrict rotation of the chassis of the vehicle to be recovered relative to the support boom about the coupled pivot axis in the at least one direction.

As such, the coupler may be easily coupled to the chassis of the vehicle in a restricted rotation condition.

The fixed attachment member may extend between the support boom and the chassis, the fixed attachment member being spaced from the pivoting attachment.

The fixed attachment member may comprise a rod or a strap configured to couple to an attachment member on the chassis.

With this arrangement, the fixed attachment member may easily act in a tensioned arrangement to restrict rotation. In another arrangement, the fixed attachment member may act in a compression arrangement to restrict rotation

The coupler may be at a free end of the support boom.

The coupler may comprise a removable mount.

The vehicle lift device may comprise a lift actuator configured to act on the lift boom to move the lift boom.

The vehicle lift device may comprise a connector acting as a lift boom pivot joint.

According to a further aspect of the present invention, there is provided a towing vehicle comprising a vehicle lift device as described above.

According to a further aspect of the present invention, there is provided a method of operating a vehicle lift device for a recovery vehicle, the lift device comprising a lift boom configured to be pivotably connected to the recovery vehicle, a support boom on the lift boom configured to support a vehicle to be recovered, the method comprising changing the vehicle lift device between a first operating configuration and a second operating configuration, in which in the first operating configuration, the support boom is restricted from rotating about the lift boom, and the support boom is configured to pivotably couple with a chassis of the vehicle to be recovered about a coupled pivot axis, and in the second operating configuration, the support boom is freely pivotable about the lift boom and the support boom is configured to be restrictively coupled with the chassis of the vehicle to be recovered to restrict pivoting of the chassis about the coupled pivot axis in at least one direction.

### BRIEF DESCRIPTION OF THE DRAWINGS

Embodiments of the invention will now be described with reference to the accompanying drawings, in which:
Figure 1 is a schematic side view of a recovery vehicle with a vehicle lift device in a first operating configuration coupled to a vehicle to be recovered with the vehicle to be recovered in a grounded state;
Figure 2 is a schematic side view of the recovery vehicle with the vehicle lift device shown in Figure 1 in a second operating configuration coupled to a vehicle to be recovered with the vehicle to be recovered in a grounded state;
Figure 3 is a schematic side view of the recovery vehicle with the vehicle lift device shown in Figure 1 in the first operating configuration coupled to a vehicle to be recovered with the vehicle to be recovered in a lifted state;
Figure 4 is a schematic side view of the recovery vehicle with the vehicle lift device shown in Figure 1 in the second operating configuration coupled to a vehicle to be recovered with the vehicle to be recovered in a lifted state;
Figure 5 is a schematic view of part of the vehicle lift device shown in Figures 2 to 4 showing part of a lift boom and part of a support boom and a control mechanism for selectively restricting relative movement of the lift boom and support boom, with the control mechanism in a selectively restricted condition;
Figure 6 is a schematic view of part of the vehicle lift device shown in Figures 2 to 4 showing part of a lift boom and part of a support boom and a control mechanism for selectively restricting relative movement of the lift boom and support boom, with the control mechanism moving between its second condition and its selectively restricted condition; and
Figure 7 is a schematic view of part of the vehicle lift device shown in Figures 2 to 4 showing part of a lift boom and part of a support boom and a control mechanism for selectively restricting relative movement of the lift boom and support boom, with the control mechanism its second condition.

### DETAILED DESCRIPTION OF EMBODIMENT(S)

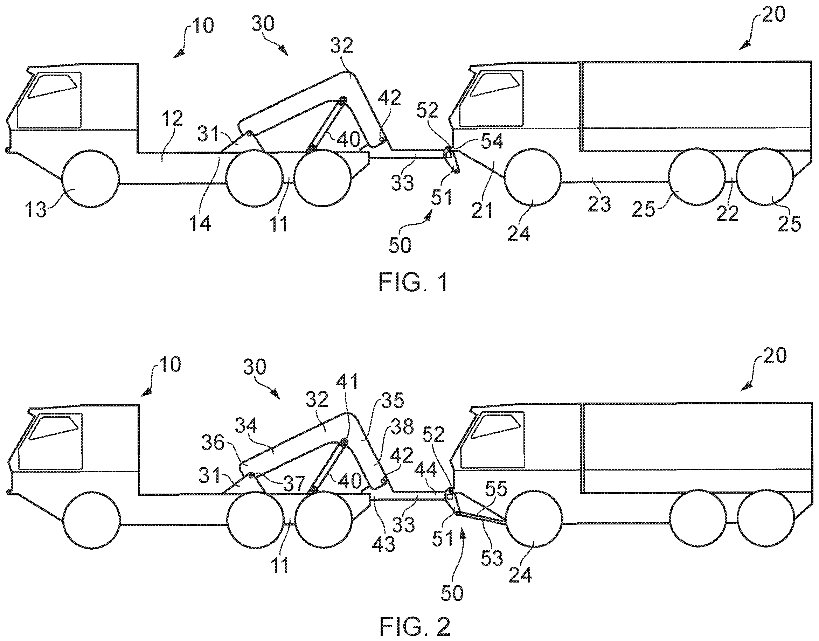

Referring to Figures 1 and 2, a view of a recovery vehicle 10 is shown together with a vehicle to be recovered 20. The recovery vehicle 10 has a rear end 11. The recovery vehicle 10 has a vehicle lift device 30. The vehicle lift device 30 is on the rear end 11 of the recovery vehicle 10. The vehicle lift device 30 is coupled with the vehicle to be recovered 20. As shown herein, the vehicle lift device 30 is coupled to a front end 21 of the vehicle to be recovered 20. However, it will be understood that the vehicle lift device 30 may be coupled to any end of the vehicle, for example, a rear end 22 of the vehicle to be recovered 20. The vehicle lift device 30 is on a recovery vehicle chassis 12. The chassis 12 is supported on the ground by wheels 13. The vehicle lift device 30 may be mounted on a base 14 which is mountable to a recovery vehicle.

The vehicle to be recovered 20 has a chassis 23. The chassis 23 is supported on the ground by front wheels 24 and rear wheels 25. The load of the vehicle is distributed between the wheels 24, 25.

The vehicle lift device 30 is pivotable mounted on the recovery vehicle 10. The vehicle lift device 30 has a connector 31 mounting the vehicle lift device 30 to the recovery vehicle chassis 12.

The vehicle lift device 30 comprises a lift boom 32 and a support boom 33. The lift boom 32 is an L-shaped elongate arm. The support boom 33 is an elongate arm. The shape of each of the lift boom 32 and the support boom 33 may differ. The support boom 33 is mounted to the lift boom 32.

The lift boom 32 is pivotably mounted at one end to the recovery vehicle chassis 12. The lift boom 32 is mounted is pivotably mounted by the connector 31 at a forward end 36. The connector 31 forms a lift boom pivot joint 37. The connector 31 is integrally formed with the recovery vehicle chassis 12. The lift boom pivot axis defined by the lift boom pivot joint 37 extends horizontally.

As described herein, the term "horizontal" refers to a direction, plane or axis, extending parallel to a plane of a surface on which the recovery vehicle 10 is typically stood in a stationary position.

The lift boom 32 extends rearwardly from the connector 31. The support boom 33 extends from a rearward end 38 of the lift boom 32. The vehicle to be recovered 20 is supported by the support boom 33. That is, at least part of the vehicle to be recovered 20 is able to be moved away from, or lifted, from the ground on which the vehicle to be recovered is disposed when the support boom 33 acts on the vehicle to be recovered 20 in a direction away from the ground.

In the present description, the term 'front' refers to components toward the front of the vehicle and the term 'rear' refers to components towards the rear of the vehicle. The terms 'forward' and 'rearward' shall be construed accordingly. The position of features may be construed relative to other components, for example a forward component may be disposed on a forward side of another component, but towards the rear of the vehicle. Similarly, the terms 'upper' and 'lower' refer to the position of components relative to a surface (`the ground') on which a vehicle is disposed in normal operation. As such, the terms 'upwardly' and 'downwardly' should be construed accordingly.

A lift actuator 40 acts on the lift boom 32 to cause movement of the lift boom 32. The lift actuator 40 in the present arrangement is a hydraulic ram. Other actuating means, such as a pneumatic ram may be used. The lift actuator 40 extends between the recovery vehicle chassis 12 and the lift boom 32. The lift actuator 40 is pivotably mounted to the lift boom 32 at a lift actuator pivot joint 41. Action of the lift actuator 40 causes the lift boom 32 to rotate about the lift boom pivot joint 37. As the lift boom 32 rotates, the rearward end 38 of the lift boom 32 is caused to move upwardly or downwardly with respect to the ground.

The lift boom 32 comprises a first arm portion 34 and a second arm portion 35. The first arm portion 34 is an elongate member. The second arm portion 35 is an elongate member and extends from the first arm portion 34. The first arm portion 34 is pivotably mounted at the first end 36 to the recovery vehicle chassis 12. The second arm portion 35 extends substantially transverse from the first arm portion 34. The second arm portion 35 extends downwardly from the first arm portion 34. The support boom 33 is mounted on the second arm portion 35.

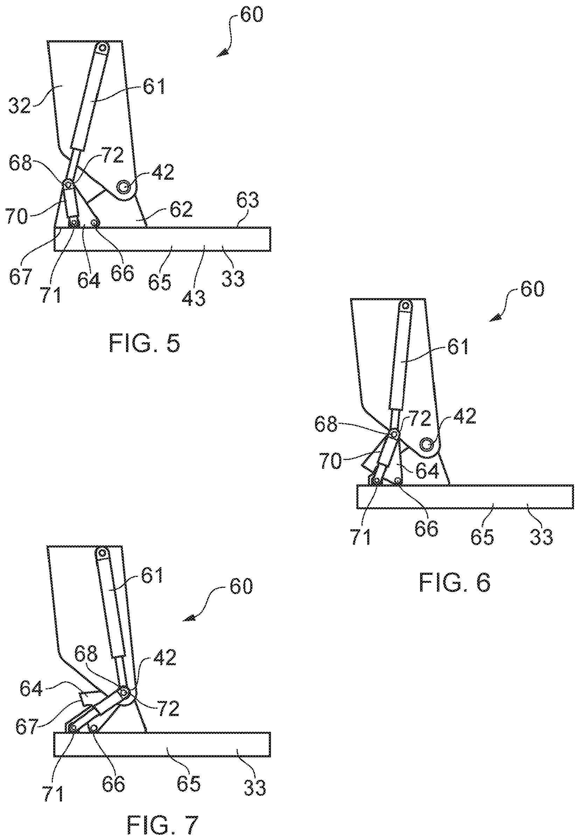

The support boom 33 is pivotably mounted to the lift boom 32 by a support boom pivot joint 42. The support boom pivot joint 42 defines a pivot axis about which the support boom 33 is rotatable relative to the lift boom 32. The support boom pivot joint 42 is at the rearward end 38 of the lift boom 32. Referring to Figures 5 to 7, pivoting of the support boom 33 and the lift boom 32 with respect to each other is dependent on a control mechanism 60 and an adjustment actuator 61.

The support boom pivot joint 42 is at a first end of the support boom 33. The vehicle to be recovered 20 is supported at a second end 44, or free end, of the support boom 33. The support boom 33 comprises a coupler 50 at the second end 44. The coupler 50 is configured to couple with the vehicle to be recovered 20. The coupler 50 is not limited to coupling to a specific vehicle type and may be coupled to a vehicle to be recovered at a plurality of attachment points, dependent on the type of vehicle.

The coupler 50 comprises a removable mount 51. The coupler 50 is therefore removably mountable to the second end 44 of the support boom 33. The removable mount 51 in embodiments is integrally formed with the support boom 33. As such, the removable mount 51 and support boom 33 may be formed as one single component.

Referring to Figure 2, the coupler 50 comprises a pivoting attachment 52 and a fixed attachment 53. In Figure 1, the fixed attachment 53 is absent as it is not used in the operating configuration shown therein. The pivoting attachment 52 is configured to couple the support boom 33 to a chassis 23 of the vehicle to be recovered 20 in a pivoting coupling. That is, the chassis 23 of the vehicle to be recovered 20 is capable of rotating about the support boom 33. The fixed attachment 53 is configured to couple the support boom 33 to the vehicle to be recovered 20 in a restrictive coupling. That is, the chassis 23 of the vehicle to be recovered 20 is restricted from rotating about the support boom 33.

The pivoting attachment 52 in the present embodiment provides for pivoting of the chassis 23 of the vehicle to be recovered 20 about the support boom 33. The pivoting attachment 52 couples to an attachment point 54 on the chassis 23 of the vehicle to be recovered 20. The attachment point 54 on the chassis 23 of the vehicle to be recovered may be an attachment hook, strut or other component on the chassis 23 of the vehicle to be recovered. The pivoting attachment 52 forms a pivoting coupling with the attachment point. For example, in the present embodiment the pivoting attachment 52 includes a pin which locates in a hook acting as the attachment point 54.

As described above, the pivoting attachment 52 pivotably couples to the chassis 23 of the vehicle to be recovered 20. As such, a coupled pivot axis between the support boom 33 and the chassis 23 of the vehicle to be recovered 20 is formed by the pivoting attachment 52. In an alternative embodiment, the pivoting attachment 52 couples to the front wheels 24 of the vehicle to be recovered 20. Alternatively, the pivoting attachment couples to the rear wheels 25 of the vehicle to be recovered 20. The pivoting attachment may take the form of one or more wheel cradles (not shown). In such embodiments, the coupled pivot axis between the support boom 33 and the chassis 23 of the vehicle to be recovered 20 is formed by the axle of the wheels 24, 25 of the vehicle to be recovered 20, such that the coupled pivot axis extends along the axle.

The term "coupled pivot axis" is used herein to refer to an axis of rotation between the support boom 33 and the chassis 23 of the vehicle to be recovered 20. The location of the coupled pivot axis may vary. For example, the axis of rotation of the coupled pivot axis may be formed at the attachment point of the coupler 50 with the chassis 23. The coupled pivot axis may be formed by a pivot joint formed between two components of the coupler. In another embodiment, the coupled pivot axis is formed by the axle of a set of wheels on the vehicle 20 to be recovered itself. In such an embodiment, the support boom may fixedly couple to the wheels of the vehicle, but the chassis of the vehicle to be recovered is free to pivot.

The fixed attachment 53 restrictively couples the support boom 33 to the vehicle to be recovered 20. The fixed attachment 53 extends between the support boom 33 and the vehicle to be recovered 20. The fixed attachment 53 is spaced from the pivoting attachment 52 and restricts rotation about the pivoting attachment 52.

The fixed attachment 53 in the present embodiment comprises a strap 55. The strap 55 acts in tension to prevent rotation of the chassis 23 of the vehicle to be recovered 20 about the pivoting attachment 52. With such an arrangement, rotation is prevented about the coupled pivot axis in one direction and so is restrictively coupled. The term "restrictively coupled" is used herein to refer to prevention of movement in at least one desired direction, whilst potentially providing for another direction, but may include rigid coupling in which movement is prevented in any direction. The fixed attachment 53 may prevent rotation of the chassis 23 of the vehicle to be recovered 20 about the pivoting attachment 52 by acting in compression. Rotation may be prevented about the pivot axis of the pivoting attachment in one direction or both directions. Examples of fixed attachments include rods, chains, and blocks.

When rotation of the chassis 23 of the vehicle to be recovered 20 and the support boom 33 is to be provided, the pivoting attachment 52 is used and the fixed attachment 53 is omitted. When rotation of the chassis 23 of the vehicle to be recovered 20 and the support boom 33 about the coupled pivot axis is to be prevented, the fixed attachment 53 is coupled between the chassis 23 of the vehicle to be recovered 20 and the support boom 33.

In the present embodiment, pivoting is provided by the pivoting attachment 52 in the absence or detachment of the fixed attachment 53 extending between the support boom 33 and the chassis 23 of the vehicle to be recovered 20. In an alternative embodiment the pivoting attachment 52 and the fixed attachment 53 are interchangeable in dependence on the type of coupling desired.

Referring to Figures 5 to 7, pivoting of the support boom 33 and the lift boom 32 with respect to each other is dependent on the control mechanism 60 and the adjustment actuator 61.

The support boom 33 is configured to pivot relative to the lift boom 32 about the support boom pivot joint 42. The support boom pivot joint 42 is at the rearward end 38 of the lift boom 32 and the first end 43 of the support boom 33. The support boom pivot joint 42 is on support plates 62 upstanding from an upper side 63 of the support boom 33.

The adjustment actuator 61 acts on the support boom 33 to selectively cause movement of the support boom 33. The adjustment actuator 61 in the present arrangement is a hydraulic ram. Other actuating means, such as a pneumatic ram may be used. The adjustment actuator 61 extends between the lift boom 32 and the support boom 33. The adjustment actuator 61 is pivotably mounted to the lift boom 32. Action of the adjustment actuator 61 selectively causes the support boom 33 to rotate about the support boom pivot joint 42 when the adjustment actuator 61 is in the position shown in Figure 5. As the support boom 33 rotates, the free end 44 of the support boom 33 is caused to move upwardly or downwardly with respect to the ground.

The adjustment actuator 61 acts on the support boom 33 through the control member 64. The control member 64 is moveably mounted to a body 65 of the support boom 33. The control member 64 is pivotably mounted to the body 65 of the support boom 33 by a control member pivot joint 66. The control member pivot joint 66 defines a control member pivot axis. The control member 64 has an urging face 67 which acts on the body 65 of the support boom 33 to urge the support boom 33 to rotate about the support boom pivot joint 42.

The adjustment actuator 61 is pivotably mounted to the control member 64. An adjustment pivot joint 68 mounts the adjustment actuator 61 and the control member 64.

A control actuator 70 acts on the control member 64 to selectively cause movement of the control member 64. The control actuator 70 in the present arrangement is a hydraulic ram. Other actuating means, such as a pneumatic ram may be used. The control actuator 70 extends between the control member 64 and the support boom 33. The control actuator 70 is mounted to the support boom 33 by base pivot joint 71.

The control actuator 70 is mounted on the control member 64 by control pivot joint 72. The control pivot joint 72 defines a control pivot axis. The control pivot axis in the present embodiment is coaxial with the pivot axis of the adjustment pivot joint 68. Action of the control actuator 70 selectively causes the control member 64 to rotate about the base pivot joint 71.

Base pivot joint 71 defines a base pivot axis. The radial distance between the base pivot axis and the adjustment pivot joint 68 corresponds to the radial distance between the base pivot axis and the support boom pivot joint 42.

It will be understood that the configuration of the control mechanism 60 may differ. For example, the respective positioning of the control actuator 70 and the control member 64 may vary. Although in the above described embodiments, the control member 64 is pivotably mounted to the body 65 of the support boom 33, alternative motions are possible. For example, in embodiments the control member is slidable relative to the body of the support boom to move the pivot axis of the adjustment pivot joint relative to the pivot axis of the support boom pivot joint.

The control mechanism 60 is movable between first and second conditions. The first condition is shown in Figure 5. In the first condition, the support boom 33 is restricted from rotating about the support boom pivot joint 42. The adjustment actuator 61 acts between the lift boom 32 and the support boom 33 to restrict pivoting of the support boom 33. The relative position of the support boom 33 relative to the lift boom 32 is fixed unless the adjustment actuator 61 is actively actuated. The adjustment actuator 61 may be used to selectively adjust the fixed position of the support boom 33 and the lift boom 32.

The second condition is shown in Figure 7. The control mechanism 60 is shown moving between the first, locking, condition and the second, freely pivoting, condition in Figure 6. In the free pivoting position the support boom 33 is substantially free to rotate about the support boom pivot joint 42. The adjustment pivot axis of the adjustment pivot joint 68 is moved into a coaxial orientation with the support boom pivot joint 42. In such a position, the adjustment actuator 61 is unable to act between the lift boom 32 and the support boom 33 to restrict pivoting of the support boom 33. The adjustment actuator 61 is prevented from restricting rotation of the support boom 33 relative to the lift boom 32.

The lift device 30 comprises a controller configured to operate the lift actuator 40, the adjustment actuator 61 and the control actuator 70. The controller is configured to operate each of the actuators 40, 61, 70 independently of each other. Operation of one or more actuators 40, 61, 70 may be restricted.

During operating configurations, in which the lift actuator 40 is operable to act on the lift boom 32 to cause the lift device 30 to support and therefore lift the vehicle to be recovered 20, operation of the adjustment actuator 61 is restricted. The controller prevents actuation of the adjustment actuator 61.

To move between the first condition and the free pivoting position the control member 64 is rotated. The control actuator 70 is actuated to act on the control member 64 and cause the control member 64 to rotate. The control member 64 therefore rotates and moves the adjustment actuator 61. The controller is configured to allow the adjustment actuator 61 to move, for example by allowing the adjustment actuator 61 to contract or expand as necessary. By actuation of the control actuator 70, the adjustment pivot joint 68 is rotated between the first condition, spaced from the support boom pivot joint, and the coaxial orientation with the support boom pivot joint 42.

In operation, the vehicle lift device 30 is initially configured with the control mechanism 60 in the first condition. As such, the support boom 33 is initially restricted from pivoting relative to the lift boom 32. It will be understood that the vehicle lift device 30 may initially be in the second condition. As such, the support boom 33 is initially free to pivot about the lift boom 32.

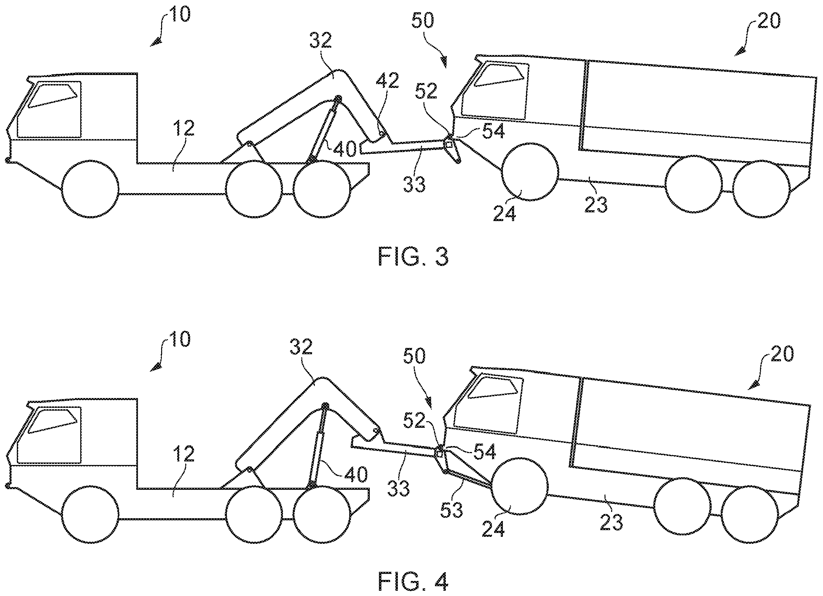

To operate the vehicle lift device 30 in a first configuration, as shown in Figures 1 and 3, the control mechanism 60 is operated in the first condition and the coupler 50 is configured to be pivotably coupled with the vehicle chassis 23 to allow pivoting of the vehicle chassis 23 about the coupled pivot axis.

The vehicle lift device 30 is brought proximate to one end of the vehicle to be recovered 20. The coupler 50 is positioned relative to the vehicle to be recovered 20, and the pivotable attachment 52 is pivotably coupled to the attachment point 54 on the chassis 23 of the vehicle to be recovered 20. The coupled pivot axis is formed at the pivoting attachment 52.

When coupled, the controller is configured to operate the lift actuator 40. The lift actuator 40 acts on the lift boom 32 and urges the lift boom 32 to rotate and raise the support boom 33. As the position of the support boom 33 is locked relative to the lift boom 32, the support boom 33 is raised relative to the ground and the coupler 50 is raised. The coupler 50 acts on the chassis 23 of the vehicle to be recovered 20 and the chassis 23 is lifted at the coupled end. The chassis 23 rotates about the pivoting attachment 52 forming the pivoting coupling.

The location of the hinge point is formed at the pivoting attachment 52. The hinge point between the vehicles 10, 20 is therefore formed at the coupling between the vehicles. As such, the coupling of the vehicles 10, 20 is relatively straightforward.

To operate the vehicle lift device 30 in a second configuration, as shown in Figures 2 and 4, the control mechanism 60 is operated in the second condition and the coupler 50 is configured to be restrictively coupled with the vehicle chassis 23 to restrict pivoting of the vehicle chassis 23 about the coupled pivot axis. If the control mechanism 60 is in the locked condition, the vehicle lift device 30 may first be coupled to the vehicle to be recovered 20 and then moved into the second condition, or may be moved into the second condition prior to coupling to the vehicle to be recovered 20.

The vehicle lift device 30 is brought proximate to one end of the vehicle to be recovered 20. The coupler 50 is positioned relative to the vehicle to be recovered 20, and the pivotable attachment 52 is pivotably coupled to the attachment point 54 on the chassis 23 of the vehicle to be recovered 20. The fixed attachment 53 is mounted between the chassis 23 of the vehicle to be recovered 20 and the support boom 33 as shown in Figure 2. With this arrangement, the fixed attachment 53 restricts rotation about the pivotable attachment 52 by the fixed attachment 53 being urged into tension.

When coupled, the controller is configured to operate the lift actuator 40. The lift actuator 40 acts on the lift boom 32 and urges the lift boom 32 to rotate and raise the support boom 33. As the support boom 33 is free to pivot relative to the lift boom 32, the coupled pivot axis is formed at the support beam pivot axis 42. The chassis 23 is prevented from pivoting relative to the support boom 33. As such the distance between the centre of gravity of the vehicle 20 to be recovered and the pivot point is maximised. Furthermore, the load required to lift the vehicle is reduced.

Rotation of the lift beam 32 causes the support boom pivot joint 42 to be raised relative to the ground. As such, the support boom 33 is raised and acts on the chassis 23 of the vehicle to be recovered 20. The chassis 23 is therefore lifted at the coupled end.

Although one control mechanism 60 is described above, it will be understood that alternative control mechanisms are possible. In one embodiment, the adjustment actuator 61 is selectively deactivated to allow the support boom to pivot relative to the lift boom. With such an arrangement, when the adjustment actuator 61 is deactivated then the support boom 33 is able to be rotated about the lift boom 32.

An advantage of the previously described embodiments in which the adjustment pivot joint of the adjustment actuator 61 is manoeuvred into alignment with the support beam pivot joint 42 is that the lift boom is free to pivot without deactivating the pivot actuator. As such, the adjustment actuator 61 will not provide any damping effect on the relative movement of the lift boom relative to the support boom. As such no forces are reacted through the pivot actuator and cannot apply undesired forces elsewhere on the structure.

In an alternative embodiment, the adjustment actuator 61 is disconnected from the lift boom 32 and/or the support boom 33. As such the support boom 33 is then able to pivot freely relative to the lift boom 32 about the support boom pivot axis. An advantage of the previously described embodiments in which the adjustment actuator 61 is not disconnected is that disconnecting and reconnecting the adjustment actuator 61 can be time consuming, and provides an opportunity for components to be mislaid. Furthermore, by providing no physical disconnection it is possible to minimise the possibility of components jamming or being damaged.

Although the invention has been described above with reference to one or more preferred embodiments, it will be appreciated that various changes or modifications may be made without departing from the scope of the invention as defined in the appended claims.

## Claims

1. A vehicle lift device (30) for a recovery vehicle (10) comprising:
a lift boom (32) configured to be pivotably connected to the recovery vehicle,
a support boom (33) on the lift boom configured to support a vehicle to be recovered (20),
the vehicle lift device is **characterised in that** it is operable in a first operating configuration and a second operating configuration, in which:
in the first operating configuration, the support boom is restricted from rotating about the lift boom by a means for restricting rotation of the support boom about the lift boom, and the support boom is configured to pivotably couple about a coupled pivot axis to a chassis (23) of the vehicle to be recovered,
and in the second operating configuration, the support boom is freely pivotable about the lift boom and the support boom is configured to be restrictively coupled with the chassis of the vehicle to be recovered to restrict pivoting of the chassis about the coupled pivot axis in at least one direction by a means for causing restriction of the pivoting of the chassis about the coupled pivot axis in the at least one direction.

2. The vehicle lift device (30) according to claim 1, comprising a support boom pivot joint (42) about which the support boom (33) is configured to pivot relative to the lift boom (32), optionally further comprising a control mechanism (60) configured to act in a first condition in which the support boom is restricted from rotating about the support boom pivot joint, and a second condition in which the support boom is free to rotate about the support boom pivot joint.

3. The vehicle lift device (30) according to claim 2, further comprising an adjustment actuator (61) extending from the lift boom (32) and configured to act on the support boom (33) to control movement of the support boom relative to the lift boom optionally wherein the adjustment actuator is configured to act on the support boom about an adjustment pivot joint (68), wherein, in the first condition, the pivot axis of the adjustment pivot joint is spaced from the pivot axis of the support boom pivot joint (42), and, in the second condition, the pivot axis of the adjustment pivot joint is coaxial with the pivot axis of the support boom pivot joint.

4. The vehicle lift device (30) according to claim 3, further comprising a control member (64) on the support boom (33), in which the adjustment pivot joint (68) is on the control member and the control member is movable to move the pivot axis of the adjustment pivot joint, optionally the control member is pivotably mounted on the support boom, and optionally wherein the control member comprises an urging face (67) which is locatable against a surface of the support boom to act on the support boom to restrict rotation of the support boom about the support boom pivot axis.

5. The vehicle lift device (30) according to claim 4, further comprising a control actuator (70) configured to move the control member (64) and optionally, the control actuator extends between the support boom (33) and the control member.

6. The vehicle lift device (30) according to any preceding claim, comprising a coupler (50) configured to couple the support boom (33) to the chassis (23) of the vehicle to be recovered.

7. The vehicle lift device (30) according to claim 6, wherein, in the first operating configuration, the coupler (50) is configured to be pivotably coupled with the chassis (23) to allow pivoting of the chassis about the coupled pivot axis, and, in the second operating configuration, the coupler is configured to restrictively couple with the chassis to restrict pivoting of the chassis about the pivot axis in the at least one direction.

8. The vehicle lift device (30) according to claim 6 or claim 7, wherein the coupler (50) comprises a pivoting attachment (52) configured to pivotably couple the support boom (33) to the chassis (23) of the vehicle to be recovered about the coupled pivot axis, and optionally
wherein the pivoting attachment comprises a coupling pin configured to couple to an attachment point on the chassis or wherein the pivoting attachment is configured to support the wheel (24, 25) of the vehicle to be recovered (20), such that the support boom is pivotably coupled with the chassis of the vehicle to be recovered about an axle of the vehicle to be recovered acting as the coupled pivot axis.

9. The vehicle lift device (30) according to claim 8, wherein the coupler (50) comprises a fixed attachment member (53) configured to restrict rotation of the chassis (23) of the vehicle to be recovered (23) relative to the support boom (33) about the coupled pivot axis in the at least one direction, optionally wherein the fixed attachment member extends between the support boom and the chassis, the fixed attachment member being spaced from the pivoting attachment (52), and optionally wherein the fixed attachment member comprises a rod or a strap (55) configured to couple to an attachment member on the chassis.

10. The vehicle lift device (30) according to any of claims 7 to 9, wherein the coupler (50) is at a free end of the support boom (33), and optionally wherein the coupler comprises a removable mount (51).

11. The vehicle lift device (30) according to any preceding claim, comprising a lift actuator (40) configured to act on the lift boom (32) to move the lift boom, and/or a connector (31) acting as a lift boom pivot joint.

12. A towing vehicle comprising a vehicle lift device (30) according to any preceding claim.

13. A method of operating a vehicle lift device (30) for a recovery vehicle (10), the lift device comprising:
a lift boom (32) configured to be pivotably connected to the recovery vehicle,
a support boom (33) on the lift boom configured to support a vehicle to be recovered (20),
the method comprising changing the vehicle lift device between a first operating configuration and a second operating configuration, in which:
in the first operating configuration, the support boom is restricted from rotating about the lift boom, and the support boom is configured to pivotably couple to a chassis (23) of the vehicle to be recovered about a coupled pivot axis, and
in the second operating configuration, the support boom is freely pivotable about the lift boom and the support boom is configured to be restrictively coupled to the chassis of the vehicle to be recovered to restrict pivoting of the chassis about the coupled pivot axis in at least one direction.

## Patentansprüche

1. Fahrzeughebevorrichtung (30) für ein Bergungsfahrzeug (10), umfassend:
einen Hebeausleger (32), der so konfiguriert ist, dass er schwenkbar mit dem Bergungsfahrzeug verbunden werden kann,
einen an dem Hebeausleger angeordneten Stützausleger (33), der so konfiguriert ist, dass er ein zu bergendes Fahrzeug (20) abstützt,
wobei die Fahrzeughebevorrichtung **dadurch gekennzeichnet ist,**
**dass** sie in einer ersten Betriebskonfiguration und in einer zweiten Betriebskonfiguration betrieben werden kann, wobei:
in der ersten Betriebskonfiguration der Stützausleger durch ein Mittel zur Begrenzung der Schwenkung des Stützauslegers um den Hebeausleger an der Schwenkung um den Hebeausleger gehindert ist und der Stützausleger so konfiguriert ist, dass er schwenkbar um eine gekoppelte Schwenkachse an ein Fahrgestell (23) des zu bergenden Fahrzeugs gekoppelt werden kann, und
in der zweiten Betriebskonfiguration der Stützausleger frei um den Hebeausleger schwenkbar ist und der Stützausleger so konfiguriert ist, dass er restriktiv mit dem Fahrgestell des zu bergenden Fahrzeugs gekoppelt werden kann, um das Schwenken des Fahrgestells um die gekoppelte Schwenkachse in mindestens einer Richtung durch ein Mittel zu begrenzen, das eine Begrenzung des Schwenkens des Fahrgestells um die gekoppelte Schwenkachse in der mindestens einen Richtung bewirkt.

2. Fahrzeughebevorrichtung (30) nach Anspruch 1, umfassend ein Stützausleger-Drehgelenk (42), um das der Stützausleger (33) so konfiguriert ist, dass er relativ zu dem Hebeausleger (32) schwenken kann, wobei sie optional ferner einen Steuermechanismus (60) umfasst, der so konfiguriert ist, dass er in einem ersten Zustand wirksam ist, in dem der Stützausleger daran gehindert ist, um das Stützausleger-Drehgelenk zu schwenken, und in einem zweiten Zustand wirksam ist, in dem der Stützausleger frei um das Stützausleger-Drehgelenk schwenken kann.

3. Fahrzeughebevorrichtung (30) nach Anspruch 2, ferner umfassend einen Einstell-Aktuator (61), der sich von dem Hebeausleger (32) aus erstreckt und so konfiguriert ist, dass er auf den Stützausleger (33) einwirkt, um die Bewegung des Stützauslegers relativ zu dem Hebeausleger zu steuern, wobei optional der Einstell-Aktuator so konfiguriert ist, dass er auf den Stützausleger um ein Einstell-Drehgelenk (68) einwirkt, wobei in dem ersten Zustand die Drehachse des Einstell-Drehgelenks von der Drehachse des Stützausleger-Drehgelenks (42) beabstandet ist, und in dem zweiten Zustand die Drehachse des Einstell-Drehgelenks koaxial mit der Drehachse des Stützausleger-Drehgelenks ist.

4. Fahrzeughebevorrichtung (30) nach Anspruch 3, ferner umfassend ein Steuerelement (64) an dem Stützausleger (33), wobei sich das Einstell-Drehgelenk (68) an dem Steuerelement befindet und das Steuerelement beweglich ist, um die Drehachse des Einstell-Drehgelenks zu bewegen, wobei optional das Steuerelement schwenkbar an dem Stützausleger angebracht ist, und wobei optional das Steuerelement eine Druckfläche (67) umfasst, die gegen eine Fläche des Stützauslegers positioniert werden kann, um auf den Stützausleger einzuwirken und die Schwenkung des Stützauslegers um die Drehachse des Stützauslegers zu begrenzen.

5. Fahrzeughebevorrichtung (30) nach Anspruch 4, ferner umfassend einen Steuer-Aktuator (70), der so konfiguriert ist, dass er das Steuerelement (64) bewegt, wobei optional der Steuer-Aktuator sich zwischen dem Stützausleger (33) und dem Steuerelement erstreckt.

6. Fahrzeughebevorrichtung (30) nach einem der vorhergehenden Ansprüche, umfassend eine Kupplung (50), die so konfiguriert ist, dass sie den Stützausleger (33) mit dem Fahrgestell (23) des zu bergenden Fahrzeugs koppelt.

7. Fahrzeughebevorrichtung (30) nach Anspruch 6, wobei in der ersten Betriebskonfiguration die Kupplung (50) so konfiguriert ist, dass sie schwenkbar mit dem Fahrgestell (23) gekoppelt ist, um ein Schwenken des Fahrgestells um die gekoppelte Drehachse zu ermöglichen, und in der zweiten Betriebskonfiguration die Kupplung so konfiguriert ist, dass sie restriktiv mit dem Fahrgestell gekoppelt ist, um ein Schwenken des Fahrgestells um die Schwenkachse in der mindestens einen Richtung zu begrenzen.

8. Fahrzeughebevorrichtung (30) nach Anspruch 6 oder Anspruch 7, wobei die Kupplung (50) eine schwenkbare Befestigung (52) umfasst, die so konfiguriert ist, dass sie den Stützausleger (33) schwenkbar mit dem Fahrgestell (23) des zu bergenden Fahrzeugs um die gekoppelte Schwenkachse koppelt, und wobei optional die schwenkbare Befestigung einen Kupplungsstift umfasst, der so konfiguriert ist, dass er mit einem Befestigungspunkt am Fahrgestell gekoppelt werden kann, oder wobei die schwenkbare Befestigung so konfiguriert ist, dass sie das Rad (24, 25) des zu bergenden Fahrzeugs (20) abstützt, so dass der Stützausleger schwenkbar mit dem Fahrgestell des zu bergenden Fahrzeugs um eine Achse des zu bergenden Fahrzeugs gekoppelt ist, die als die gekoppelte Drehachse dient.

9. Fahrzeughebevorrichtung (30) nach Anspruch 8, wobei die Kupplung (50) ein festes Befestigungselement (53) umfasst, das so konfiguriert ist, dass es die Drehung des Fahrgestells (23) des zu bergenden Fahrzeugs (23) relativ zu dem Stützausleger (33) um die gekoppelte Schwenkachse in der mindestens einen Richtung einschränkt, wobei optional das feste Befestigungselement sich zwischen dem Stützausleger und dem Fahrgestell erstreckt, wobei das feste Befestigungselement von der Drehbefestigung (52) beabstandet ist, und wobei das feste Befestigungselement optional eine Stange oder ein Band (55) umfasst, das so konfiguriert ist, dass es mit einem Befestigungselement am Fahrgestell gekoppelt werden kann.

10. Fahrzeughebevorrichtung (30) nach einem der Ansprüche 7 bis 9, wobei sich die Kupplung (50) an einem freien Ende des Stützauslegers (33) befindet, und wobei optional die Kupplung eine abnehmbare Halterung (51) umfasst.

11. Fahrzeughebevorrichtung (30) nach einem der vorhergehenden Ansprüche, umfassend einen Hebe-Aktuator (40), der so konfiguriert ist, dass er auf den Hebeausleger (32) einwirkt, um den Hebeausleger zu bewegen, und/oder ein Verbindungsstück (31), das als Drehgelenk für den Hebeausleger wirkt.

12. Abschleppfahrzeug mit einer Fahrzeughebevorrichtung (30) nach einem der vorhergehenden Ansprüche.

13. Verfahren zum Betreiben einer Fahrzeughebevorrichtung (30) für ein Bergungsfahrzeug (10), wobei die Hebevorrichtung Folgendes umfasst:
einen Hebeausleger (32), der so konfiguriert ist, dass er schwenkbar mit dem Bergungsfahrzeug verbunden werden kann,
einen an dem Hebeausleger angeordneten Stützausleger (33), der so konfiguriert ist, dass er ein zu bergendes Fahrzeug (20) abstützt,
wobei das Verfahren das Verändern der Fahrzeughebevorrichtung zwischen einer ersten Betriebskonfiguration und einer zweiten Betriebskonfiguration umfasst, wobei:
in der ersten Betriebskonfiguration der Stützausleger daran gehindert ist, sich um den Hebeausleger zu drehen, und der Stützausleger so konfiguriert ist, dass er schwenkbar an ein Fahrgestell (23) des zu bergenden Fahrzeugs um eine gekoppelte Schwenkachse gekoppelt werden kann, und
in der zweiten Betriebskonfiguration der Stützausleger frei um den Hubausleger schwenkbar ist, und der Stützausleger ist so konfiguriert, dass er restriktiv mit dem Fahrgestell des zu bergenden Fahrzeugs gekoppelt werden kann, um das Schwenken des Fahrgestells um die gekoppelte Schwenkachse in mindestens einer Richtung zu begrenzen.

## Revendications

1. Dispositif de levage de véhicule (30) pour un véhicule de dépannage (10) comprenant :
- une flèche de levage (32) reliée en pivotement au véhicule de dépannage,
- une flèche de soutien (33) sur la flèche de levage et configurée pour soutenir un véhicule à dépanner (20),
le dispositif de levage de véhicule étant **caractérisé en ce que**
- il fonctionne dans une première configuration de fonctionnement et dans une seconde configuration de fonctionnement,
* dans la première configuration de fonctionnement, la flèche de support est bloquée en rotation autour de la flèche de levage par un moyen limitant la rotation de la flèche de soutien autour de la flèche de levage, et
- la flèche de soutien est configurée pour coupler en pivotement autour d'un axe de pivotement couplé au châssis (23) du véhicule à dépanner, et
- dans la seconde configuration de fonctionnement, la flèche de soutien peut pivoter librement autour de la flèche de levage et la flèche de soutien est configurée pour être couplée, de manière limitée au châssis du véhicule à dépanner pour limiter le pivotement du châssis autour de l'axe de pivotement couplé dans au moins une direction avec un moyen pour limiter le pivotement du châssis autour de l'axe de pivotement couplé dans au moins une direction.

2. Dispositif de levage de véhicule (30) selon la revendication 1, comprenant :
une articulation de pivotement (42) de la flèche de soutien autour de laquelle la flèche de soutien (33) peut pivoter par rapport à la flèche de levage (32) et en option, comprenant en outre un mécanisme de commande (60) pour agir dans un premier état dans lequel la flèche de soutien est limitée en rotation autour de l'articulation de pivot de la flèche de soutien et un second état dans lequel la flèche de soutien est libre de tourner autour de l'articulation de pivot de la flèche de soutien.

3. Dispositif de levage de véhicule (30) selon la revendication 2, comprenant en outre :
un actionneur de réglage (61) issu de la flèche de levage (32) et coopérant avec la flèche de soutien (33) pour commander le mouvement de la flèche de soutien par rapport à la flèche de levage ou pivotement,
l'actionneur de réglage agissant sur la flèche de soutien autour d'une articulation de pivot de réglage (68),
* dans le premier état, l'axe de pivot de l'articulation de pivot de réglage est espacé de l'axe de pivot de l'articulation de pivot (42) de la flèche de soutien et dans le second état, l'axe de pivot de l'articulation de pivot de réglage est coaxial avec l'axe de pivot de l'articulation de pivot de flèche de soutien.

4. Dispositif de levage de véhicule (30) selon la revendication 3, comprenant en outre :
un élément de commande (64) sur la flèche de soutien (33) qui comporte l'articulation de pivot de réglage (68) sur l'élément de commande et cet élément de commande est mobile pour déplacer l'axe de pivot de l'articulation de pivot de réglage, en option,
* l'élément de commande est monté en pivotement sur la flèche de soutien et en option,
* l'élément de commande comporte une face de poussée (67) qui peut se placer contre une surface de la flèche de soutien pour agir sur la flèche de soutien et limiter la rotation de la flèche de soutien autour de l'axe de pivot de la flèche de soutien.

5. Dispositif de levage de véhicule (30) selon la revendication 4, comprenant en outre :
un actionneur de commande (70) pour déplacer l'organe de commande (64) et en option, l'actionneur de commande est entre la flèche de soutien (33) et l'élément de commande.

6. Dispositif de levage de véhicule (30) selon l'une quelconque des revendications précédentes,
comprenant un coupleur (50) pour relier la flèche de soutien (33) au châssis (23) du véhicule à dépanner.

7. Dispositif de levage de véhicule (30) selon la revendication 6,
dans lequel
dans la première configuration de fonctionnement, le coupleur (50) est couplé en pivotement au châssis (23) pour permettre le pivotement du châssis autour de l'axe de pivotement couplé et dans la seconde configuration de fonctionnement, le coupleur est configuré pour un couplage limité avec le châssis pour limiter le pivotement du châssis autour de l'axe de pivot dans au moins une direction.

8. Dispositif de levage de véhicule (30) selon la revendication 6 ou la revendication 7,
dans lequel
le coupleur (50) comporte une fixation pivotante (52) pour relier en pivotement la flèche de soutien (33) au châssis (23) du véhicule à dépanner autour de l'axe de pivotement couplé et en option,
- la fixation de pivotement comprend une broche de couplage pour être reliée à un point de fixation du châssis, ou
- la fixation pivotante est configurée pour soutenir la roue (24, 25) du véhicule à dépanner de façon que la flèche de soutien soit couplée en pivotement au châssis du véhicule à dépanner autour d'un axe du véhicule à dépanner en agissant comme axe de pivotement couplé.

9. Dispositif de levage de véhicule (30) selon la revendication 8,
dans lequel
le coupleur (50) comporte un élément de fixation fixe (53) pour limiter le pivotement du châssis (23) du véhicule à dépanner (20) par rapport à la flèche de soutien (33) autour de l'axe de pivot, couplé dans au moins une direction, en option,
l'élément de fixation fixe est entre la flèche de soutien et le châssis, l'élément de fixation fixe étant écarté de la fixation pivotante (52) et en option, l'élément de fixation fixe comprend une tige ou une bande (55) pour être relié à un élément de fixation du châssis.

10. Dispositif de levage de véhicule (30) selon l'une quelconque des revendications 7 à 9,
dans lequel
le coupleur (50) est à l'extrémité libre de la flèche de soutien (33) et en option,
le coupleur (50) a un support amovible (51).

11. Dispositif de levage de véhicule (30) selon l'une quelconque des revendications précédentes,
comprenant un actionneur de levage (40) pour agir sur la flèche de levage (32) et entraîner la flèche de levage et/ou un connecteur (31) fonctionnant comme articulation de pivot de flèche de levage.

12. Véhicule tracteur comportant un dispositif de levage de véhicule (30) selon l'une quelconque des revendications précédentes.

13. Procédé de fonctionnement d'un dispositif de levage de véhicule (30) pour un véhicule dépanneur (10),
le dispositif de levage comprenant :
- une flèche de levage (32) pour être reliée en pivotement au véhicule de dépannage,
- une flèche de soutien (33) sur la flèche de levage pour soutenir un véhicule à dépanner (20),
- le procédé consistant à changer le dispositif de levage de véhicule entre une première configuration de fonctionnement et une seconde configuration de fonctionnement,
- dans la première configuration de fonctionnement, la flèche de soutien est limitée en rotation autour de la flèche de levage et la flèche de levage est configurée pour être reliée en pivotement au châssis (23) du véhicule à dépanner autour d'un axe de pivot couplé, et
- dans la seconde configuration de fonctionnement, la flèche de soutien peut pivoter librement autour de la flèche de levage et la flèche de soutien est configurée pour être couplée de manière limitée au châssis du véhicule à dépanner pour limiter le pivotement du châssis autour de l'axe de pivot couplé, dans au moins une direction.
